# EUROPÄISCHE PATENTSCHRIFT

(11) **EP 2 002 679 B1**
(45) Veröffentlichungstag und Bekanntmachung des Hinweises auf die Patenterteilung: **05.10.2011**
(21) Anmeldenummer: 07727703.6
(22) Anmeldetag: 03.04.2007
(51) Int. Cl.: H04W 24/10

(54) **MESSDATENERFASSUNG**
MEASUREMENT DATA RECORDING
SAISIE DE DONNEES DE MESURE

(30) Priorität: 03.04.2006 DE 102006015857
(43) Veröffentlichungstag der Anmeldung: 17.12.2008
(73) Patentinhaber: Vodafone Holding GmbH, 40213 Düsseldorf (DE)
(72) Erfinder: KARACHOS, Georgios, 40223 Düsseldorf (DE); STEPPING, Christoph, 41352 Korschenbroich (DE); BITTNER, Frank, 28865 Lilienthal (DE); KUS, Mehmet, 28775 Bremen (DE)
(74) Vertreter: Weisse, Renate
(86) Internationale Anmeldenummer: PCT/EP2007/053232
(87) Internationale Veröffentlichungsnummer: WO 2007/113296

(56) Entgegenhaltungen:
- WO-A-2004/004381
- WO-A1-2006/005947
- US-A1- 2003 134 631
- US-B1- 6 434 364

## Beschreibung

### Technisches Gebiet

Die Erfindung betrifft ein Verfahren zum Erfassen von Messdaten in einem Mobilfunknetz, wobei die Messdaten von einem ersten Server zum Archivieren und/oder Auswerten gesammelt werden, die von wenigstens einer als Mobilfunkendgerät ausgebildeten Messeinheit generiert werden, mit den Verfahrensschritten des Oberbegriffs des Anspruchs 1. Die Erfindung umfasst weiterhin ein Mobilfunkendgerät, welches als Messeinheit zum Durchführen von Messungen ausgebildet ist und die Merkmale des Oberbegriffs des Anspruchs 4 enthält. Außerdem beinhaltet die Erfindung eine entsprechende Messanordnung für ein Mobilfunknetz, enthaltend
- (a): einen ersten Server zum Erfassen, Archivieren und Auswerten von Messdaten,
- (b): wenigstens ein als Messeinheit ausgebildetes Mobilfunkendgerät, welches eine Messapplikation speichert und ausführt und damit Messgrößen des Mobilfunknetzes ermittelt und die entsprechenden Messdaten an den ersten Server weiterleitet,
- (c): Übertragungsmittel zum Versenden und Empfangen der Messdaten für den ersten Server.
- (d): einen zweiten Server zum Übermitteln der Messapplikation an die Messeinheit,
- (e): Steuerungsmittel, welche die Messeinheit durch den zweiten Server über das Mobilfunknetz steuern.

### Stand der Technik

Die Anforderungen an Mobilfunknetze bzgl. ihrer Qualität werden immer höher gesetzt. Daher vermessen die Mobilfunkbetreiber ständig das Mobilfunknetz und führen dazu geeignete Messungen mit Messstationen aus. Jede Messstation arbeitet dazu ein Messprogramm ab. Es ist bekannt, Messstationen für Qualitätsmessungen eines Mobilfunknetzes einzusetzen. Die Messstationen übermitteln die Messdaten direkt an einen zentralen Server oder sammeln sie, damit sie zu einem späteren Zeitpunkt auf einen zentralen Rechner zur Auswertung übertragen werden können. Die Messstationen werden dazu im Mobilfunknetz aufgestellt, die Messdaten bzgl. der Qualität des Mobilfunknetzes generieren. Diese Daten werden an einen Server zur Verarbeitung übermittelt.

Die Messstationen sind sowohl mobil, als auch stationär ausgebildet. Im Fall der stationären Messstationen ist es sinnvoll, mehrere gleichzeitig an verschiedenen Messpunkten des Mobilfunknetzes einzusetzen. Für mobile Messstationen reicht es oft aus, eine oder nur wenige einzusetzen, da man diese mobil im Mobilfunknetz an beliebigen Messpunkten verwenden kann. Die Messstationen erhalten zur Durchführung einer Messung ein Messprogramm bzw. -applikation. Dieses Programm wird durch die Messstation abgearbeitet. Dabei werden Messdaten erzeugt. Die Messdaten werden zur Auswertung und/oder Archivierung einem Server zugeführt.

Es ist ferner bekannt, Mobilfunkendgeräte von Mobilfunkteilnehmern zur Messung der Qualität eines Mobilfunknetzes heranzuziehen. Dabei werden die Messdaten zentral in einem Server des Mobilfunknetzes erfasst und ausgewertet. Ausgesuchte Mobilfunkendgeräte übermitteln dazu die Informationen über das Mobilfunknetz an den zentralen Server.

Die US 6 464 364 B1 offenbart eine Testsoftware (Mobile Test Software Agent, MTSA), die in mobile Endgeräte implementiert wird, um beispielsweise die Qualität eines Funknetzes zu testen. Beim Aktivieren der Testsoftware schaltet das mobile Endgerät von seinem normalen Betriebsmodus in einen Testmodus um. Die Testergebnisse werden einem sog. Radio Network Performance Manager (RNPM) zugesendet, der sie speichert und auswertet.

Die WO 2004 0043 81 A1 beschreibt eine Methode zur Diagnose eines Funknetzes, bei dem mobile Endgeräte drahtlos über eine Diagnose-Schnittstelle mit einem Server in Verbindung stehen, der entsprechende Messanordnungen an die mobilen Endgeräte schickt. Die mobilen Endgeräte senden daraufhin beispielsweise Daten über den Netzwerkstatus an den Server zurück, der daraufhin nach Auswertung der Daten das Netzwerk optimiert.

In der US 2003/0134631 A1 werden ein weiteres Verfahren und ein System zum Messen und Beobachten von Eigenschaften eines Mobilfunknetzes durch Messapplikationen bei Mobilfunkendgeräten beschrieben. Die gemessenen Werte werden über das Mobilfunknetz an einen Server zum Speichern und Auswerten übermittelt. Über den Server und Verbindungen des Mobilfunknetzes lassen sich die Messapplikationen konfigurieren und aktualisieren.

Nachteil bei den bekannten Messanordnungen ist, dass sie zentral nur schwierig zu koordinieren sind. Änderungen im Messprogramm, die sich häufig bei den Auswertungen der Messergebnisse ergeben, sind nur schwer durchführbar.

### Offenbarung der Erfindung

Aufgabe der Erfindung ist es, das jeweilige Messprogramm variabel gestalten zu können, ohne hohe Kosten dadurch zu verursachen.

Erfindungsgemäß wird die Aufgabe dadurch gelöst, dass bei einem Verfahren der eingangs genannten Art zum Erfassen von Messdaten in einem Mobilfunknetz folgender Verfahrensschritt vorgesehen ist:
- (h): Auslösen der Anforderung der Messapplikation bei einem schwachen Funkempfang durch eine Initiierungsapplikation der Messeinheit.

Die Aufgabe wird ferner durch ein Mobilfunkendgerät der eingangs genannten Art dadurch gelöst, dass
- e): eine Initiierungsapplikation zum Anfordern der Messapplikation von dem zweiten Server vorgesehen ist, wobei eine Auslösung der Anforderung bei einem schwachen Funkempfang erfolgt.

Die Aufgabe wird zudem durch eine Messanordnung der eingangs genannten Art für ein Mobilfunknetz dadurch gelöst, dass
- f): eine Initiierungsapplikation bei der Messeinheit zum Anfordern der Messapplikation von dem zweiten Server vorgesehen ist, wobei eine Auslösung der Anforderung bei einem schwachen Funkempfang erfolgt.

Die Erfindung beruht grundsätzlich darauf, dass Messungen, besonders solche, welche das Mobilfunknetz betreffen, zentral vorgenommen werden können. Dadurch, dass zunächst eine Messapplikation von dem Server zu der Messeinheit übermittelt wird, können beliebige Messprojekte und Messprogramme ferngesteuert werden. Durch die Messanordnung lässt sich somit das Messprogramm extrem flexibel ausgestalten. Das erfindungsgemäße Verfahren umfasst dabei die Verfahrensschritte, die für die Messung erforderlich sind.

Ein Aspekt des erfindungsgemäßen Verfahrens besteht darin, dass nunmehr die Übermittlung der Messapplikation vom Server zur Messeinheit über das Mobilfunknetz erfolgt. Durch die Übertragung der Messapplikation über das Mobilfunknetz zur Messeinheit hin kann sich die Messeinheit an einem beliebigen Ort des Mobilfunknetzes aufhalten und die Messung durchführen. Aus der Ferne kann nun festgelegt werden, wie das Messprogramm der Messeinheit auszusehen hat.

Gemäß einer vorteilhaften Ausgestaltung des erfindungsgemäßen Verfahrens ist vorgesehen, dass die Messeinheit eine vom Server übermittelte Messapplikation empfängt. Damit kann die Messeinheit an alle erforderlichen Messgegebenheiten aus der Ferne angepasst werden. Dazu wird die Messapplikation mit den Messanweisungen für die Messeinheit zunächst auf dem Server erstellt oder zumindest dort zwischengespeichert. Diese Messapplikation wird anschließend an die Messeinheit übermittelt. Auf diese Weise wird gewährleistet, dass die Messeinheit mehr als ein Messprogramm durchführen kann.

Eine vorteilhafte Ausgestaltung des erfindungsgemäßen Verfahrens wird dadurch erreicht, dass die Messdaten über das Mobilfunknetz zum Server übermittelt werden. Durch diese Maßnahme können die Messdaten unmittelbar an den Server wieder zurück übermittelt und ausgewertet werden. Die Messdaten müssen somit nicht in der Messeinheit gespeichert werden und mit einem geeigneten Speichermedium auf den Server zu einem späteren Zeitpunkt übertragen werden. Die Messungen können im Übrigen auch gegenüber dem Besitzer der Messeinheit unbemerkt vorgenommen werden.

Eine bevorzugte Ausbildung des erfindungsgemäßen Verfahrens wird dadurch erzielt, indem der Datenaustausch mittels eines festgelegten Übertragungsprotokolls erfolgt. Durch die Verwendung eines Datenprotokolls wird die Einheitlichkeit der Übertragung der Daten festgelegt. So können auch in dem Protokoll bestimmte Sicherheitsmaßnahmen oder Verschlüsselungen enthalten sein.

Eine besonders vorteilhafte Ausgestaltung des erfindungsgemäßen Verfahrens wird erhalten, wenn die Ausführung der Messapplikation zur der Messung durch einen Mobilfunkteilnehmer bestätigt wird, wobei die Bestätigung über das Mobilfunknetz an den Server erfolgt. Vorzugsweise erfolgt dann die Übermittlung von der Messapplikation, der Messdaten und/oder der Bestätigung des Mobilfunkteilnehmers als SMS oder als MMS.

Eine besondere Variante des erfindungsgemäßen Servers und des erfindungsgemäßen Mobilfunkendgeräts besteht darin, dass die Übermittlung der Messapplikation und/oder der Messdaten über ein Mobilfunknetz erfolgt. Durch die Verwendung des Mobilfunknetzes zur Übertragung der Messapplikation bzw. der Messdaten ist die Messeinheit im Rahmen des Mobilfunknetzes weitestgehend mobil. Sie kann praktisch überall eingesetzt werden.

Gemäß einer bevorzugten Ausführung des erfindungsgemäßen Mobilfunkendgeräts ist eine Initiierungsapplikation vorgesehen, welche eine Messapplikation von einem Server anfordert. Die Anforderung einer solcher Messapplikation kann durch ein Ereignis, wie z.B. relativ schwacher Funkempfang, ausgelöst werden. Aber auch in bestimmten Zeitabständen kann das Mobilfunkendgerät als Messeinheit eine Messapplikation anfordern.

Grundsätzlich sind der Server zum Auswerten bzw. Archivieren der Messdaten und der Server zum Übermitteln von Messapplikationen unterschiedliche Einheiten. Entsprechend einer vorteilhaften Ausgestaltung der Erfindung sind der erste und der zweite Server jedoch als eine Einheit ausgebildet.

Weitere Vorteile ergeben sich aus dem Gegenstand der Unteransprüche, sowie der Zeichnung mit der dazugehörigen Beschreibung.

### Kurze Beschreibung der Zeichnung

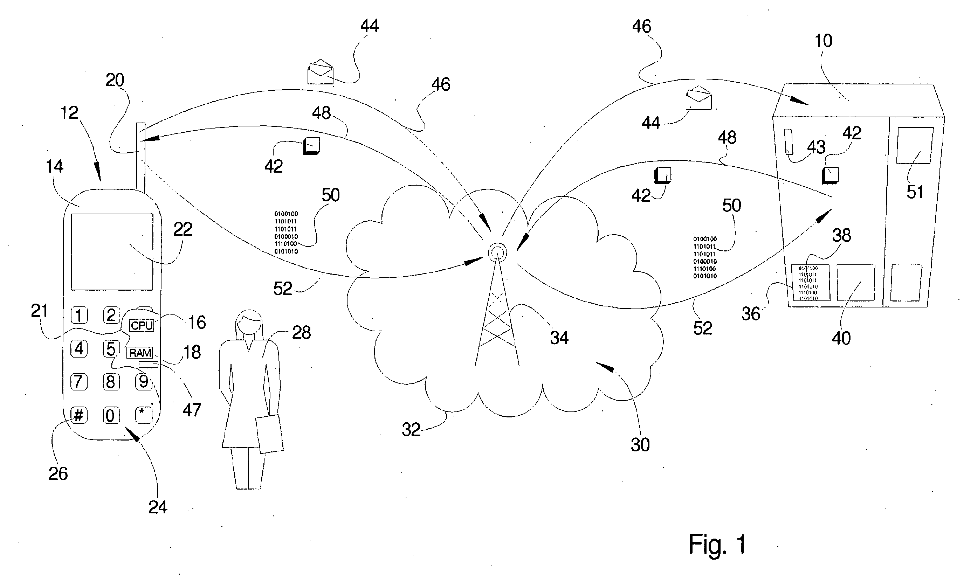

- Fig. 1: zeigt in einer schematischen Prinzipskizze eine erfindungsgemäße Anordnung, nach dem das entsprechende Verfahren abläuft.

### Bevorzugtes Ausführungsbeispiel

In Fig. 1 wird mit 10 ein Server bezeichnet. Der Server 10 dient zum Erfassen und Steuern von wenigstens einer Messeinheit 12. Die Messeinheit 12 besteht im vorliegenden Ausführungsbeispiel aus einem Mobilfunkendgerät 14. Das Mobilfunkendgerät 14 enthält insbesondere einen Prozessor 16 und einen Speicher 18. Für die Darstellung wurde ein Stück 21 aus dem Mobilfunkendgerät 14 herausgebrochen, um sowohl Speicher 18, als auch den Prozessor 16 sichtbar zu machen. Ferner enthält das Mobilfunkendgerät 14 ein Sende- und Empfangsmodul 20, eine Anzeige 22 und ein Bedienerfeld 24. Mit Tasten 26 des Bedienerfelds 24 wird das Mobilfunkendgerät 14 von einem Mobilfunkteilnehmer 28 bedient.

Der Server 10 ist in ein Mobilfunknetz 30 integriert, d.h. der Server 10 kann sowohl aus dem Mobilfunknetz 30 Daten empfangen als auch über das Mobilfunknetz 30 Daten versenden. Das Mobilfunknetz 30, beispielsweise nach dem GSM- oder dem UMTS-Standard, wie es hier beschrieben wird, ist dem Fachmann hinreichend bekannt, so dass es nicht näher erläutert werden muss. Das Mobilfunknetz 30 wird vereinfacht als Wolke 32, in der symbolisch ein Funkmast 34 angeordnet ist, dargestellt. Der Server 10 ist prozessoraesteuert und weist einen Datenspeicher 36 auf, in welchem wenigstens eine Datenbank 38 abgelegt ist. Mit der Datenbank 38 werden Messdaten, welche z.B. mit der Messeinheit 12 erzeugt werden, verarbeitet.

Der Server 10 verfügt ferner über eine prozessorgesteuerte Steuereinheit 40. Mit Hilfe der Steuereinheit 40 werden Messapplikationen 42 generiert. Diese Messapplikationen 42 enthalten Anweisungen für die Messeinheit 12, wie die jeweilige Messung durchzuführen ist. Diese Messapplikationen 42 werden von einer Sendeeinheit 43 des Servers 10 über das Mobilfunknetz 30 zu dem als Messeinheit 12 ausgebildeten Mobilfunkendgerät 14 übermittelt. Die Messapplikationen 42 können dabei zufällig an beliebige Messeinheiten 12 über das Mobilfunknetz 30 gesendet werden. Gelegentlich ist es aber auch - üblicherweise in Abhängigkeit des gewählten Messverfahrens - sinnvoll, die Messapplikationen 42 gezielt an bevorzugte Messeinheiten 12 zu übermitteln. Die Übermittlung der Messapplikation 42 über das Mobilfunknetz 30 wird durch die Pfeile 48 symbolisiert.

Sobald die Messapplikation 42 bei der Messeinheit 12 angekommen ist, wird der Eingang bestätigt. Die Bestätigung wird entweder manuell durch den Mobilfunkteilnehmer 28 oder automatisch durch die Messeinheit 12 vorgenommen. Die Automatisierung der Bestätigung kann bereits ein Bestandteil der Messapplikation 42 sein. Die Bestätigung erfolgt mit einer SMS 44 (= Short Message Service) über das Mobilfunknetz 30. Die Versendung der Bestätigungs-SMS 44 wird durch Pfeile 46 dargestellt.

Die Messeinheit 12 vollzieht nun entsprechend den Anweisungen der Messapplikation 42 die gewünschte Messung bzw. Messungen. Dabei kann es sich beispielsweise um Messungen von Parametern bezüglich der Qualität des Mobilfunknetzes 30 handeln. Grundsätzlich sind aber auch andere Messungen, die durch die Messeinheit 12 vorgenommen werden denkbar. Die Messeinheiten 12 können für ein Messprogramm ein besonderes Messmodul 47 aufweisen. Diese können gegebenenfalls auch mit einem Adapter an die Messeinheit 12 angeschlossen und ausgetauscht werden. Das Messmodul 47 wird zur Durchführung einer Messung durch den Prozessor 16 gesteuert.

Durch die Messung der Messeinheit 12 werden Messdaten 50 generiert. Diese Messdaten 50 werden über das Sende- und Empfangsmodul 20 des Mobilfunkendgeräts 14, sowie das Mobilfunknetz 30 zum Server 10 versendet. Der Server 10 verfügt über eine geeignete Empfangseinheit 51, mit der er die Messdaten 50 empfanden kann. Die Versendung der Messdaten 50 kann ebenfalls über SMS oder MMS erfolgen. Die Versendung der Messdaten 50 über das Mobilfunknetz 30 wird mit Pfeilen 52 dargestellt. Der Server 10 kann nun die empfangenen Messdaten 50 in dem Datenspeicher 36 mit Hilfe der Datenbank 38 archivieren und/oder verarbeiten. '

Die Messapplikationen 42, die durch den Server 10 generiert werden, können bei Bedarf derart ausgestaltet sein, dass sie veranlassen, zwischen dem Server 10 und der Messeinheit 12 einen stetigen Kontakt zu erhalten. Über diesen Kontakt können nicht nur zwischen der Messeinheit 12 und dem Server 10 Daten ausgetauscht, sondern die Messeinheit 12 kann darüber auch ferngesteuert werden. Dieses Verfahren erlaubt es, die Messapplikationen 42 an beliebige Messprojekte flexibel anzupassen.

Alternativ kann der Kontakt zwischen dem Server 10 und der Messeinheit 12 nur bei Bedarf aufgebaut werden. Welche der Verbindungsarten letztendlich gewählt wird, ergibt sich aus dem gewünschten Messprogramm. Der Datenaustausch zwischen dem Server 10 und der Messeinheit 12 erfolgt nach einem standardisierten Protokoll, in dem festgelegt wird, wie und welche Daten zu übermitteln sind. Beispielsweise durch Kontrollsummen, die in dem Protokoll festgelegt sind, kann sichergestellt werden, dass immer vollständige Daten zum Empfänger gelangen.

## Patentansprüche

1. Verfahren zum Erfassen von Messdaten (50) in einem Mobilfunknetz (30), wobei die Messdaten (50) von einem ersten Server (10) zum Archivieren und/oder Auswerten gesammelt werden, die von wenigstens einer als Mobilfunkendgerät (14) ausgebildeten Messeinheit (12) generiert werden, mit folgenden Verfahrensschritten:
(a) Anfordern einer Messapplikation durch die Messeinheit (12) von einem zweiten Server (10),
(b) Übermitteln einer Messapplikation (42) durch den zweiten Server (10) an die Messeinheit (12),
(c) Speichern der Messapplikation (42) durch die Messeinheit (12),
(d) Ausführung der Messapplikation (42), welche so die Messung mit der Messeinheit (12) vornimmt,
(e) Generieren von Messdaten (50) durch die Messeinheit (12),
(f) Übermitteln (52) der Messdaten (50) von der Messeinheit (12) zu dem ersten Server (10),
(g) Speichern und Auswerten der Messdaten (50) durch den ersten Server (10),
**gekennzeichnet durch**
(h) Auslösen der Anforderung der Messapplikation bei einem schwachen Funkempfang **durch** eine Initiierungsapplikation der Messeinheit (12).

2. Verfahren zum Erfassen von Messdaten (50) in einem Mobilfunknetz (30) nach Anspruch 1, **dadurch gekennzeichnet, dass** die Übermittlung (48) der Messapplikation (42) von dem zweiten Server (10) zur Messeinheit (12) über das Mobilfunknetz (30) erfolgt.

3. Verfahren zum Erfassen von Messdaten (50) in einem Mobilfunknetz (30) nach einem der Ansprüche 1 bis 2, **dadurch gekennzeichnet, dass** die Messdaten (50) über das Mobilfunknetz (30) zum ersten Server (10) übermittelt werden.

4. Mobilfunkendgerät (14) für ein Verfahren nach einem der Ansprüche 1 bis 3, welches als Messeinheit (12) zum Durchführen von Messungen ausgebildet ist, wobei das Mobilfunkendgerät (14) enthält:
a) ein Empfangsmodul (20) zum Empfang einer Messapplikation (42) von einem zweiten Server (10),
b) einen Speicher (18) zum Speichern der Messapplikation (42),
c) ein prozessorgesteuertes Messmodul (47) zur Generierung von Messdaten unter Ausführung der Messapplikation (42),
d) ein Sendemodul (20) zum Übermitteln der Messdaten (50) an einen ersten Server (10) zur Verarbeitung und/oder zur Archivierung,
**dadurch gekennzeichnet, dass**
e) eine Initiierungsapplikation zum Anfordern der Messapplikation von dem zweiten Server (10) vorgesehen ist, wobei eine Auslösung der Anforderung bei einem schwachen Funkempfang erfolgt.

5. Mobilfunkendgerät (14) für ein Verfahren nach einem der Ansprüche 1 bis 3, welches als Messeinheit (12) zum Durchführen von Messungen ausgebildet ist, nach Anspruch 4, **gekennzeichnet durch** eine Kommunikationseinheit (20) zur Kommunikation über ein Mobilfunknetz (30) über welches die Übermittlung (48, 52) der Messapplikation (42) und/oder der Messdaten (50) erfolgt.

6. Messanordnung für ein Mobilfunknetz (30), enthaltend
a) einen ersten Server (10) zum Erfassen, Archivieren und Auswerten von Messdaten (50),
b) wenigstens ein als Messeinheit (12) ausgebildetes Mobilfunkendgerät (14), welches eine Messapplikation (42) speichert und ausführt und damit Messgrößen des Mobilfunknetzes (30) ermittelt und die entsprechenden Messdaten (50) an den ersten Server (10) weiterleitet,
c) Übertragungsmittel (43, 51) zum Versenden und Empfangen der Messdaten für den ersten Server (10),
d) einen zweiten Server (10) zum Übermitteln der Messapplikation (42) an die Messeinheit (12),
e) Steuerungsmittel (40, 42), welche die Messeinheit (12) durch den zweiten Server (10) über das Mobilfunknetz (30) steuern,
**dadurch gekennzeichnet, dass**
f) eine Initiierungsapplikation bei der Messeinheit (12) zum Anfordern der Messapplikation von dem zweiten Server (10) vorgesehen ist, wobei eine Auslösung der Anforderung bei einem schwachen Funkempfang erfolgt.

7. Messanordnung für ein Mobilfunknetz (30) nach Anspruch 6, **dadurch gekennzeichnet, dass** der erste und der zweite Server (10) als eine Einheit ausgebildet sind.

## Claims

1. A method of recording measurement data (50) in a mobile radio network (30), wherein the measurement data (50) generated by at least one measurement unit (12) configured as a mobile terminal (14) is collected by a first server (10) for storage and evaluation, comprising the steps of:
(a) requesting a measurement application at a second server (10) by the measurement unit (12),
(b) transmitting a measurement application (42) to the measurement unit (12) by the second server (10),
(c) storing the measurement application (42) with the measurement unit (12),
(d) executing the measurement application (42) for carrying out the measurement with the measurement unit (12),
(e) generating measurement data (50) with the measurement unit (12)
(f) transmitting (52) the measurement data (50) from the measurement unit (12) to the first server (10),
(g) storing and evaluating the measurement data (50) with the first server (10),
**characterized by**
(h) triggering the request of the measurement application with a weak radio reception by an initiation application of the measurement unit (12).

2. A method of recording measurement data (50) in a mobile radio network (30) according to claim 1, **characterized in that** the transmission (48) of the measurement application (42) from the second server (10) to the measurement unit (12) is carried out via the mobile radio network (30).

3. A method of recording measurement data (50) in a mobile radio network (30) according to one of claims 1 to 2, **characterized in that** the measurement data (50) is transmitted to the first server (10) via the mobile radio network (30).

4. A mobile terminal (14) for a method according to one of claims 1 to 3, which is configured as a measurement unit (12) for performing measurements, wherein the mobile terminal (14) comprises:
a) a receiver module (20) for receiving a measurement application (42) from a second Server (10),
b) a memory (18) for storing the measurement application (42),
c) a processor-controlled measurement module (47) for generating measurement data when executing the measurement application (42),
d) a transmitter module (20) for transmitting the measurement data (50) to a first server (10) for processing and/or archiving,
**characterized in that**
e) an initiation application is provided for requesting the measurement application from the second server (10), wherein triggering the request is carried out with weak radio reception.

5. A mobile terminal (14) for a method according to one of claims 1 to 3, which is configured as a measurement unit (12) for performing measurements according to claim 4, **characterized by** a communication unit (20) for communication via a mobile radio network (30), via which the transmission (48, 52) of the measurement application (42) and/or the measurement data (50) is carried out.

6. A measuring arrangement for a mobile radio network (30) comprising:
a) a first server (10) for recording, archiving and evaluating measurement data (50),
b) at least one mobile terminal (14) configured as a measurement unit (12) which stores and executes a measurement application (42), whereby measurement values of the mobile radio network (30) are detected and the according measurement data (50) is transmitted to the first server (10),
c) transmission means (43, 51) for transmitting and receiving the measurement data at the first server (10).
d) a second server (10) for transmitting the measurement application (42) to the measurement unit (12),
e) control means (40, 42), which control the measurement unit (12) by the second server (10) via the mobile radio network (30),
**characterized in that**
f) an initiation application is provided at the measurement unit (12) for requesting the measurement application at the second server (10), wherein triggering of the request is carried out with weak radio reception.

7. A measuring arrangement for a mobile radio network (30) according to claim 6, **characterized in that** the first and the second server (10) are configured as a unit.

## Revendications

1. Procédé destiné à la saisie de données de mesure (50) dans un réseau de radiotéléphonie mobile (30), les données de mesure (50) qui sont générées par au moins une unité de mesure (12) réalisée sous forme de terminal de radiotéléphonie mobile (14) étant collectées par un premier serveur (10) en vue d'être archivées et/ou évaluées, comportant les étapes de procédé suivantes :
(a) l'unité de mesure (12) demande une application de mesure d'un second serveur (10),
(b) le second serveur (10) transmet une application de mesure (42) à l'unité de mesure (12),
(c) l'unité de mesure (12) sauvegarde l'application de mesure (42),
(d) l'application de mesure (42) qui procède ainsi à la mesure à l'aide de l'unité de mesure (12) est exécutée,
(e) l'unité de mesure (12) génère des données de mesure (50),
(f) les données de mesure (50) sont transmises (52) de l'unité de mesure (12) au premier serveur (10),
(g) le premier serveur (10) sauvegarde et évalue les données de mesure (50),
**caractérisé en ce que**
(h) une application d'initialisation de l'unité de mesure (12) déclenche la demande d'application de mesure en cas de faible captage de réseau.

2. Procédé destiné à la saisie de données de mesure (50) dans un réseau de radiotéléphonie mobile (30) selon la revendication 1, **caractérisé en ce que** la transmission (48) de l'application de mesure (42) du second serveur (10) à l'unité de mesure (12) s'effectue par l'intermédiaire du réseau de radiotéléphonie mobile (30).

3. Procédé destiné à la saisie de données de mesure (50) dans un réseau de radiotéléphonie mobile (30) selon l'une quelconque des revendications 1 ou 2, **caractérisé en ce que** les données de mesure (50) sont transmises au premier serveur (10) par l'intermédiaire du réseau de radiotéléphonie mobile (30).

4. Terminal de radiotéléphonie mobile (14) pour un procédé selon l'une quelconque des revendications 1 à 3, réalisé sous forme d'unité de mesure (12) destinée à la réalisation de mesures, le terminal de radiotéléphonie mobile (14) comprenant:
(a) un module de réception (20) destiné à recevoir une application de mesure (42) d'un second serveur (10),
(b) une mémoire (18) destinée à sauvegarder l'application de mesure (42),
(c) un module de mesure (47) commandé par processeur destiné à générer des données de mesure en exécutant l'application de mesure (42),
(d) un module d'émission (20) destiné à transmettre les mesures de données (50) à un premier serveur (10) en vue de leur traitement et/ou archivage,
**caractérisé en ce que**
(e) une application d'initialisation destinée à demander l'application de mesure du second serveur (10) est prévue, la demande étant déclenchée en cas de faible captage de réseau.

5. Terminal de radiotéléphonie mobile (14) pour un procédé selon l'une quelconque des revendications 1 à 3, réalisé sous forme d'unité de mesure (12) destinée à la réalisation de mesures, selon la revendication 4, **caractérisé par** une unité de communication (20) pour la communication via un réseau de radiotéléphonie mobile (30) permettant la transmission (48, 52) de l'application de mesure (42) et/ou des données de mesure (50).

6. Disposition de mesure pour un réseau de radiotéléphonie mobile (30), comprenant
(a) un premier serveur (10) destiné à saisir, archiver et évaluer des données de mesure (50),
(b) au moins un terminal de radiotéléphonie mobile (14) réalisé sous forme d'unité de mesure (12) qui sauvegarde et exécute une application de mesure (42) et ainsi calcule des grandeurs de mesure du réseau de radiotéléphonie mobile (30) et fait suivre les données de mesure correspondantes (50) vers le premier serveur (10),
(c) des moyens de transmission (43, 51) destinés à émettre et recevoir des données de mesure pour le premier serveur (10),
(d) un second serveur (10) destiné à la transmission de l'application de mesure (42) à l'unité de mesure (12),
(e) des moyens de commande (40, 42) commandant l'unité de mesure (12) par le second serveur (10) via le réseau de radiotéléphonie mobile (30),
**caractérisée en ce que**
(f) une application d'initialisation est prévue dans l'unité de mesure (12) pour demander l'application de mesure du second serveur (10), la demande étant déclenchée en cas de faible captage de réseau.

7. Disposition de mesure pour un réseau de radiotéléphonie mobile (30) selon la revendication 6, **caractérisée en ce que** le premier et le second serveur (10) sont réalisés sous forme d'unité.
